# EUROPEAN PATENT SPECIFICATION

(11) **EP 3 410 763 B1**
(45) Date of publication and mention of the grant of the patent: **29.07.2020**
(21) Application number: 18160504.9
(22) Date of filing: 20.08.2013
(51) Int. Cl.: H04W 16/28, H04W 72/04

(54) **WIRELESS COMMUNICATIONS APPARATUS AND METHOD**
DRAHTLOSKOMMUNIKATIONSVORRICHTUNG UND -VERFAHREN
PROCÉDÉ ET APPAREIL DE COMMUNICATION SANS FIL

(43) Date of publication of application: 05.12.2018
(62) Divisional of application: 13891879.2
(73) Proprietor: Huawei Technologies Co., Ltd., Longgang District Shenzhen, Guangdong 518129 (CN)
(72) Inventor: MA, Ni, Shenzhen, Guangdong 518129 (CN); PENG, Yan, Shenzhen, Guangdong 518129 (CN); YANG, Jing, Shenzhen, Guangdong 518129 (CN); ZHOU, Hongrui, Shenzhen, Guangdong 518129 (CN); ZHAO, Jianping, Shenzhen, Guangdong 518129 (CN)
(74) Representative: Gill Jennings & Every LLP

(56) References cited:
- WO-A1-2012/146313
- CN-A- 103 109 558
- US-A1- 2006 286 974
- US-A1- 2009 253 387
- US-B1- 6 218 987

## Description

### TECHNICAL FIELD

The present invention relates to the field of communications technologies, and in particular, to a wireless communications apparatus and method.

### BACKGROUND

At present, with rapid development of wireless communications technologies, a serious shortage of spectrum resources is becoming a bottleneck of the development of the wireless communications industry. How to make full use of limited spectrum resources and improve spectrum utilization to increase a system capacity is one of current hot research topics. It is considered as an effective means to increase a quantity of transmit antennas within a unit area.

In the prior art, a quantity of transmit antennas within a unit area may be increased mainly by using a heterogeneous network (HetNet) method, so as to improve spectrum utilization.

Specifically, a method for improving spectrum utilization by using the HetNet method includes: deploying several low-power small cells within a coverage area of a signal transmitted by a base station, so as to increase a quantity of transmit antennas within a unit area, where different small cells may adopt, on a same time-frequency resource, their respective antennas to transmit data for user equipment (User Equipment, UE), so as to implement multiplexing of spectrum resources and increase a capacity within the unit area.

However, in the foregoing method, a new site needs to be added within the coverage area of the signal of the base station, and in practical application, the new site is generally difficult to obtain; therefore, the foregoing method is also greatly limited in practical application and is difficult to implement.

US 2006/286974 A1 discloses a method for enhancing performance of a wireless communications environment, wherein the method can comprise determining channel information for a user, and assigning a user device to at least one of a predetermined at least one narrow beam or a wide beam.

WO 2012/146313 A1 relates to a method in a base station serving a cell, the method comprises the steps of: associating, in the beamformer, at least a first and a second frequency band with a respective first and a second beam, each frequency band comprising a part of the frequency bandwidth used by the base station; dynamically determining, in the controller, a degree of utilization of the at least first and second frequency bands within the at least first and second beam; and re-associating, in the beamformer, the at least first and second frequency bands with the first and second beam, based on the determined degree of utilization of frequency bands.

In US2009/253387 A1, a system and method for wirelessly communicating using beamswitching is provided. A communications system includes a high-power signal cable coupled to a signal amplifier, a radio frequency circuit coupled to the high-power signal cable, and a control unit coupled to the radio frequency circuit. The high-power signal cable conveys a transmission signal produced by the signal amplifier. The radio frequency circuit includes a plurality of antennas, a passive network having a plurality of output ports and a plurality of input ports, each output port coupled to an antenna of the plurality of antennas, and a plurality of switches coupled to the high-power signal cable, each switch coupled to an input port in the plurality of input ports. The control unit produces the control signal based on a specified coupling of the high-power signal cable to the passive network

US 6,218,987B1 relates to an apparatus and a method for simultaneously generating, with the same radio antenna apparatus, a number of narrow beams and a wide beam, covering substantially the same area covered by the individual pointed beams together.

CN 103109558A & EP2892268A1 provide a method and an apparatus for increasing user capacity of a physical sector, and a base station, wherein a same block of time-frequency resource can be multiplexed for user terminals located in different belonging beam areas, thereby increasing user capacity.

### SUMMARY

Embodiments of the present invention provide a wireless communications apparatus and method, so that under a condition that no new site is added, a quantity of transmit antennas within a unit area can be increased, and a capacity within the unit area can be increased, which is not limited in practical application and is easy to implement.

The present invention provides a wireless communications apparatus according to claim 1, a base station according to claim 11 and, a wireless communication method according to claim 12.

According to a first aspect, a wireless communications apparatus is provided, including a radio frequency module and an antenna module, where the antenna module is connected to the radio frequency module, where
the antenna module is configured to transmit a wide beam and transmit at least two narrow beams to a coverage area of the wide beam; and
when the wireless communications apparatus sends data to user equipment UE within the coverage area of the wide beam, the radio frequency module is configured to process the to-be-sent data, and the antenna module sends, by using at least one transmitted beam, data processed by the radio frequency module to the UE; or when the wireless communications apparatus receives data sent by user equipment UE within the coverage area of the wide beam, the antenna module receives, by using at least one transmitted beam, the data sent by the UE, and the radio frequency module is configured to process the data received by the antenna module.

With reference to the first aspect, in a first possible implementation manner, the antenna module includes:
a wide beam antenna submodule, configured to transmit a wide beam whose coverage area is a preset sector coverage area; and
a narrow beam antenna submodule, configured to transmit the at least two narrow beams to the coverage area of the wide beam according to an area predetermined within the coverage area of the wide beam, where one predetermined area is under coverage of at least one narrow beam.

With reference to the first possible implementation manner, in a second possible implementation manner, the wide beam antenna submodule and the narrow beam antenna submodule are a same entity antenna; or
the wide beam antenna submodule and the narrow beam antenna submodule are different entity antennas.

With reference to the second possible implementation manner, in a third possible implementation manner, when the wide beam antenna submodule and the narrow beam antenna submodule are different entity antennas, the narrow beam antenna submodule is a panel antenna.

With reference to any one of the first to the third possible implementation manners, in a fourth possible implementation manner, the radio frequency module includes:
a radio frequency unit connected to the wide beam antenna submodule, configured to process data that is to be sent by the wireless communications apparatus to UE, and send processed data to the wide beam antenna submodule, or configured to receive and process data that is sent by the wide beam antenna submodule to the radio frequency unit connected to the wide beam antenna submodule; and
a radio frequency unit connected to the narrow beam antenna submodule, configured to process data that is to be sent by the wireless communications apparatus to UE, and send processed data to the narrow beam antenna submodule, or configured to receive and process data that is sent by the narrow beam antenna submodule to the radio frequency unit connected to the narrow beam antenna submodule; where
a quantity of antenna ports of the wide beam transmitted by the wide beam antenna submodule is the same as a quantity of radio frequency channels of the radio frequency unit connected to the wide beam antenna submodule; and
a quantity of antenna ports of each narrow beam transmitted by the narrow beam antenna submodule is the same as a quantity of radio frequency channels of a radio frequency unit that is configured to process data to be transmitted by each narrow beam and that is in the radio frequency unit connected to the narrow beam antenna submodule.

With reference to the fourth possible implementation manner, in a fifth possible implementation manner, the radio frequency unit connected to the wide beam antenna submodule is a dual-channel radio frequency unit, where
the wide beam antenna submodule is specifically configured to transmit one wide beam whose quantity of antenna ports is 2; and
the radio frequency unit connected to the narrow beam antenna submodule is two single-channel radio frequency units, where
the narrow beam antenna submodule is specifically configured to transmit two narrow beams whose quantity of antenna ports is 1.

With reference to the fourth possible implementation manner, in a sixth possible implementation manner, the radio frequency unit connected to the wide beam antenna submodule is a dual-channel radio frequency unit, where
the wide beam antenna submodule is specifically configured to transmit one wide beam whose quantity of antenna ports is 2; and
the radio frequency unit connected to the narrow beam antenna submodule is a dual-channel radio frequency unit, where
the narrow beam antenna submodule is specifically configured to transmit two narrow beams whose quantity of antenna ports is 1.

With reference to the fourth possible implementation manner, in a seventh possible implementation manner, the radio frequency module is a quad-channel radio frequency unit, where
two channels of the quad-channel radio frequency unit are connected to the wide beam antenna submodule, and the other two channels are connected to the narrow beam antenna submodule;
the wide beam antenna submodule is specifically configured to transmit one wide beam whose quantity of antenna ports is 2; and
the narrow beam antenna submodule is specifically configured to transmit two narrow beams whose quantity of antenna ports is 1.

With reference to any one of the first to the seventh possible implementation manners, in an eighth possible implementation manner, the sum of the quantity of antenna ports of the wide beam transmitted by the wide beam antenna submodule and a quantity of antenna ports of each narrow beam transmitted by the narrow beam antenna submodule is not greater than the sum of a quantity of radio frequency channels of the radio frequency module.

With reference to any one of the first to the eighth possible implementation manners, in a ninth possible implementation manner, a quantity of antenna ports of a narrow beam that is transmitted by the narrow beam antenna submodule to a hotspot area in the predetermined area is greater than a quantity of antenna ports of a narrow beam that is transmitted by the narrow beam antenna submodule to a non-hotspot area in the predetermined area.

With reference to the first aspect and any one of the first to the ninth possible implementation manners of the first aspect, in a tenth possible implementation manner, the antenna module is specifically configured to perform data transmission with different UE by using different narrow beams respectively, where time-frequency resources used on the different narrow beams are the same; or
perform data transmission with different UE by using a wide beam and a narrow beam respectively, where a time-frequency resource used on the wide beam is different from a time-frequency resource used on the narrow beam.

With reference to the first aspect and any one of the first to the tenth possible implementation manners of the first aspect, in an eleventh possible implementation manner, the antenna module is further configured to instruct, by using the wide beam, the UE to report a channel status report by using a specified time-frequency resource, and receive, by using the specified time-frequency resource, the channel status report reported by the UE.

With reference to the eleventh possible implementation manner, in a twelfth possible implementation manner, the apparatus further includes a selection module, where
the antenna module is further configured to send the received channel status report to the selection module;
the selection module is configured to: according to quality that is of a channel corresponding to each beam transmitted by the antenna module and that is carried in the channel status report, select at least one beam from the wide beam and the at least two narrow beams that are transmitted by the antenna module, where the channel status report is obtained by the UE by measuring the quality of the channel corresponding to each beam transmitted by the antenna module; and
the radio frequency module is configured to process data by using a radio frequency channel corresponding to the beam selected by the selection module.

According to a second aspect, a base station is provided, including the wireless communications apparatus described above.

According to a third aspect, a wireless communication method is provided, where a base station transmits a wide beam and transmits at least two narrow beams to a coverage area of the wide beam, where the method includes:
when the base station sends data to user equipment UE within the coverage area of the wide beam, sending the data to the UE by using at least one transmitted beam; or
when the base station receives data sent by user equipment UE within the coverage area of the wide beam, receiving, by using the at least one transmitted beam, the data sent by the UE, where
the at least one beam is at least one beam in the wide beam and the at least two narrow beams.

With reference to the third aspect, in a first possible implementation manner, the at least two narrow beams are:
at least two narrow beams that are transmitted to the coverage area of the wide beam according to an area predetermined within the coverage area of the wide beam, where one predetermined area is under coverage of at least one narrow beam.

With reference to the third aspect and the first possible implementation manner of the third aspect, in a second possible implementation manner, the sum of a quantity of antenna ports of the wide beam transmitted by the base station and a quantity of antenna ports of each narrow beam transmitted by the base station is not greater than the sum of a quantity of radio frequency channels of a radio frequency module in the base station.

With reference to the third aspect and any one of the first to the second possible implementation manners of the third aspect, in a third possible implementation manner, a quantity of antenna ports of a narrow beam that is transmitted by the base station to a hotspot area in the predetermined area is greater than a quantity of antenna ports of a narrow beam that is transmitted by the base station to a non-hotspot area in the predetermined area.

With reference to the third aspect and any one of the first to the third possible implementation manners of the third aspect, in a fourth possible implementation manner, the base station transmits one wide beam whose quantity of antenna ports is 2 and two narrow beams whose quantity of antenna ports is 1.

With reference to the third aspect and any one of the first to the fourth possible implementation manners of the third aspect, in a fifth possible implementation manner, the base station transmits a wide beam and at least two narrow beams by using a same entity antenna; or
the base station separately transmits a wide beam and at least two narrow beams by using different entity antennas.

With reference to the third aspect and any one of the first to the fifth possible implementation manners of the third aspect, in a sixth possible implementation manner, when the base station performs data transmission with different UE by using different narrow beams respectively, time-frequency resources used on the different narrow beams are the same; or
when the base station performs data transmission with different UE by separately using a wide beam and a narrow beam, a time-frequency resource used on the wide beam is different from a time-frequency resource used on the narrow beam.

With reference to the third aspect and any one of the first to the sixth possible implementation manners of the third aspect, in a seventh possible implementation manner, before the sending the data to the UE by using at least one transmitted beam, or before the receiving, by using at least one transmitted beam, the data sent by the UE, the method further includes:
instructing, by the base station by using the wide beam, the UE to report a channel status report by using a specified time-frequency resource, and receiving, by using the specified time-frequency resource, the channel status report reported by the UE, where the channel status report is obtained by the UE by measuring quality of a channel corresponding to each beam transmitted by the base station; and
according to the quality that is of the channel corresponding to each beam transmitted by the base station and that is carried in the channel status report, selecting, by the base station, at least one beam from the transmitted wide beam and the transmitted at least two narrow beams, where
the sending the data to the UE by using at least one transmitted beam includes:
   sending the data to the UE by using the selected beam; or
   the receiving, by using at least one transmitted beam, the data sent by the UE includes:
      receiving, by using the selected beam, the data sent by the UE.

According to the wireless communications apparatus and method provided in the embodiments of the present invention, an antenna module transmits a wide beam, transmits at least two narrow beams to a coverage area of the wide beam, and performs data transmission with UE within the coverage area of the wide beam by using at least one transmitted beam. By means of the foregoing method, under a condition that no new site is added, a quantity of transmit antennas within a unit area can be increased, and a capacity within the unit area can be increased, which is not limited in practical application and is easy to implement.

### BRIEF DESCRIPTION OF DRAWINGS

FIG. 1 is a schematic structural diagram of a wireless communications apparatus according to an embodiment of the present invention;
FIG. 2 is a schematic diagram of a wide beam and a narrow beam transmitted by a wireless communications apparatus according to an embodiment of the present invention;
FIG. 3 is a schematic diagram of a quantity of antenna ports of a beam transmitted by a base station according to an embodiment of the present invention;
FIG. 4 is a schematic diagram in which a wide beam antenna subsystem and a narrow beam antenna subsystem are a same entity antenna according to an embodiment of the present invention;
FIG. 5a is a schematic diagram in which a wide beam antenna subsystem and a narrow beam antenna subsystem are different entity antennas according to an embodiment of the present invention;
FIG. 5b is another schematic diagram in which a wide beam antenna subsystem and a narrow beam antenna subsystem are different entity antennas according to an embodiment of the present invention;
FIG. 6 is a schematic diagram of deployment of an entity antenna according to an embodiment of the present invention;
FIG. 7 is a schematic structural diagram of another wireless communications apparatus according to an embodiment of the present invention;
FIG. 8 is a schematic structural diagram of a wireless communications apparatus that connects to a wide beam antenna subsystem and a narrow beam antenna subsystem by using a quad-channel RRU; and
FIG. 9 is a schematic diagram of transmit power used by a base station to transmit each beam according to an embodiment of the present invention.

### DESCRIPTION OF EMBODIMENTS

According to a wireless communications apparatus and method provided in embodiments of the present invention, an antenna module transmits a wide beam, transmits at least two narrow beams to a coverage area of the wide beam, and performs data transmission with UE within the coverage area of the wide beam by using at least one transmitted beam. By means of the foregoing method, under a condition that no new site is added, a quantity of transmit antennas within a unit area can be increased, and a capacity within the unit area can be increased, which is not limited in practical application and is easy to implement.

Technologies described in this specification may be applied to various communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless) system, a Frequency Division Multiple Access (FDMA, Frequency Division Multiple Addressing) system, an Orthogonal Frequency-Division Multiple Access (OFDMA, Orthogonal Frequency-Division Multiple Access) system, a single carrier FDMA (SC-FDMA) system, a General Packet Radio Service (GPRS, General Packet Radio Service) system, a Long Term Evolution (LTE, Long Term Evolution) system, and other communications systems.

This specification describes various aspects with reference to user equipment and/or a base station.

User equipment may be a wireless terminal. The wireless terminal may refer to a device that provides a user with voice and/or data connectivity, a handheld device with a radio connection function, or another processing device connected to a radio modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

The base station (for example, an access point) may refer to a device in communication with a wireless terminal via one or more sectors at an air interface in an access network. The base station may be configured to mutually convert a received over-the-air frame and an IP packet and serve as a router between the wireless terminal and a rest portion of the access network, where the rest portion of the access network may include an Internet protocol (IP) network. The base station may also coordinate attribute management of the air interface. For example, the base station may be a base station (BTS, Base Transceiver Station) in GSM or CDMA, or may be a base station (NodeB) in WCDMA, or may be an evolved NodeB (eNB or e-NodeB, evolutional Node B) in the LTE, which is not limited in this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The following describes solutions in the embodiments of the present invention in detail with reference to the accompanying drawings of the specification.

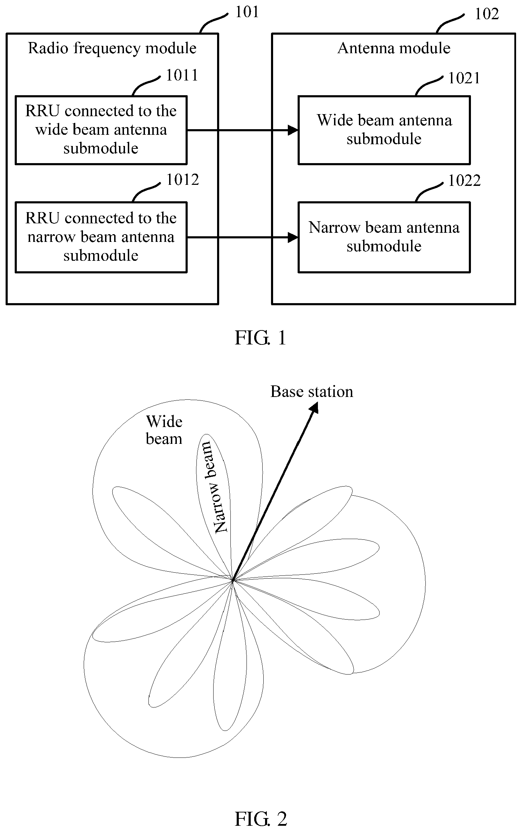

In the embodiments of the present invention, a wireless communications apparatus includes a radio frequency module and an antenna module, where by using the antenna module, the wireless communications apparatus transmits a wide beam and transmits at least two narrow beams to a coverage area of the wide beam; and the antenna module is configured to perform data transmission with UE, and the radio frequency module is configured to process transmitted data, for example, as shown in FIG. 1.

FIG. 1 is a schematic structural diagram of a wireless communications apparatus according to an embodiment of the present invention, where the apparatus may include:
a radio frequency module 101 and an antenna module 102, where the antenna module 102 is connected to the radio frequency module 101. There may be multiple manners of connecting the antenna module 102 and the radio frequency module 101. For example, the antenna module 102 and the radio frequency module 101 are two physically separated modules, and the antenna module 102 may be connected to the radio frequency module 101 by adopting a feeder; or the antenna module 102 and the radio frequency module 101 are one physically integrated module. This embodiment of the present invention sets no limitation thereto.

The antenna module 102 is configured to transmit a wide beam and transmit at least two narrow beams to a coverage area of the wide beam; and
when the wireless communications apparatus sends data to UE within the coverage area of the wide beam, the radio frequency module 101 is configured to process the to-be-sent data, and the antenna module 102 sends, by using at least one beam in the transmitted wide beam and narrow beams, data processed by the radio frequency module 101 to the UE; or when the wireless communications apparatus receives data sent by UE within the coverage area of the wide beam, the antenna module 102 receives, by using at least one beam, the data sent by the UE, and the radio frequency module 101 is configured to process the data received by the antenna module 102. Processing, by the radio frequency module 101, the to-be-sent data or the data received by the antenna module 102 may be collectively referred to as data processing. For example, processing data by the radio frequency module 101 may include performing digital/analog conversion processing, power amplification processing, intermediate frequency/radio frequency conversion processing, and the like on data.

The wireless communications apparatus shown in FIG. 1 may be specifically a base station, or some units of a base station. It can be understood that the coverage area of the wide beam transmitted by the antenna module 102 is a coverage area of a sector. The wide beam described in this embodiment of the present invention refers to a beam that can cover an entire sector, and the narrow beam is described relative to the wide beam. Beam width of the narrow beam is less than beam width of the wide beam, that is, compared with the coverage area of the wide beam, a coverage area of the narrow beam is relatively small. The coverage area of the narrow beam falls within the coverage area of the wide beam, for example, as shown in FIG. 2.

FIG. 2 is a schematic diagram of a wide beam and a narrow beam transmitted by a wireless communications apparatus according to an embodiment of the present invention. In FIG. 2, a coverage area of the wide beam is a coverage area of a sector, and at least two narrow beams are superimposed on a basis of the wide beam, so as to increase a capacity within a unit area. A quantity of narrow beams that are transmitted by a base station to each sector may be the same or may be different. In FIG. 2, an example that one base station controls three sectors is used for description, where the base station may include three wireless communications apparatuses shown in FIG. 1, which are configured to transmit wide beams (that is, three sectors are generated) in three different directions (for example, three directions of which two have an interval of 120 degrees) respectively, and each transmits at least two narrow beams to coverage areas of the wide beams transmitted by the three wireless communications apparatuses.

Further, when performing data transmission with UE by using at least one transmitted beam, the wireless communications apparatus may select, from each transmitted beam (including the wide beam and each narrow beam), at least one beam used to perform data transmission with the UE.

In addition, the antenna module 102 may be further configured to instruct the UE to send a channel status report by using a specified time-frequency resource, and receive, by using the specified time-frequency resource, the channel status report sent by the UE.

Further, the wireless communications apparatus shown in FIG. 1 may further include a selection module. In this case, the antenna module 102 is further configured to report the received channel status report to the selection module. The selection module is configured to: according to quality that is of a channel corresponding to each beam transmitted by the antenna module 102 and that is carried in the channel status report, select at least one beam from the wide beam and the at least two narrow beams that are transmitted by the antenna module 102, where the channel status report is obtained by the UE by measuring the quality of the channel corresponding to each beam transmitted by the antenna module 102. The quality of the channel may be reflected by using multiple manners or parameters. For example, the quality of the channel may be reflected by using a channel quality index (Channel Quality Index, CQI), or reference signal received power (Reference Signal Receiving Power, RSRP)/reference signal received quality (Reference Signal Receiving Quality, RSRQ), or the like, which is not further illustrated in this embodiment of the present invention. The radio frequency module 101 processes data by using a radio frequency channel corresponding to the beam selected by the selection module. For one beam, the beam corresponds to at least one channel.

Specifically, when selecting a beam according to the quality of the channel corresponding to each beam, the selection module can use different rules according to different requirements to select a proper beam. For example, the selection module may select a beam corresponding to a channel with highest channel quality according to the quality of the channel corresponding to each beam.

The antenna module 102 may further instruct, by using a wide beam or a narrow beam, the UE to receive, by using a specified time-frequency resource, data transmitted by the base station, and the antenna module 102 is further configured to perform data transmission with the UE by using a time-frequency resource (the specified time-frequency resource may be a time-frequency resource on the wide beam, or may be a time-frequency resource on a narrow beam, which depends on the beam selected by the selection module) on the beam selected by the selection module.

It can be understood that the selection module may be implemented in multiple manners. For example, the selection module may be a logical function module, which may be specifically implemented in a baseband processing unit (Base Band Unit, BBU).

When performing data transmission with the UE, if the antenna module 102 performs data transmission with different UE by using different narrow beams respectively, a same time-frequency resource may be used on the different narrow beams, so as to implement multiplexing of spectrum resources; and if the antenna module 102 performs data transmission with different UE by separately using a wide beam and a narrow beam, a time-frequency resource used on the wide beam is different from a time-frequency resource used on the narrow beam.

The foregoing wireless communications apparatus transmits a wide beam and at least two narrow beams, so that under a condition that no new site is added, a quantity of transmit antennas within a unit area can be increased, and a capacity within the unit area can be increased, which is not limited in practical application and is easy to implement.

In addition, when transmitting a wide beam, the foregoing wireless communications apparatus shown in FIG. 1 transmits at least two narrow beams to a coverage area of the wide beam at the same time, which does not affect a coverage relationship between a current sector and a neighboring sector.

Further, the antenna module 102 shown in FIG. 1 may include a wide beam antenna submodule 1021 and a narrow beam antenna submodule 1022. The wide beam antenna submodule 1021 is configured to transmit a wide beam whose coverage area is a preset sector coverage area (the coverage area of the wide beam is a coverage area of a sector); and the narrow beam antenna submodule 1022 is configured to transmit a narrow beam to the coverage area of the wide beam according to an area predetermined within the coverage area of the wide beam, where each predetermined area is under coverage of at least one narrow beam. Specifically, the narrow beam antenna submodule 1022 may transmit a narrow beam in a direction corresponding to the predetermined area. When a quantity of areas predetermined within the coverage area of the wide beam is greater than one, the narrow beam antenna submodule 1022 transmits at least one narrow beam in a direction corresponding to each predetermined area. When the quantity of areas predetermined within the coverage area of the wide beam is one, the narrow beam antenna submodule 1022 may transmit at least two narrow beams in a direction corresponding to the area. That is, in this embodiment of the present invention, the narrow beam antenna submodule 1022 may transmit at least two narrow beams in a direction corresponding to a same area. In addition, in this embodiment of the present invention, coverage areas of at least two narrow beams may partly overlap with each other.

It can be understood that in addition to transmitting a narrow beam to the area predetermined within the coverage area of the wide beam, the narrow beam antenna submodule 1022 may transmit a narrow beam to another area within the coverage area of the wide beam. This embodiment of the present invention sets no limitation thereto.

In this embodiment of the present invention, an area that is with relatively large service traffic and within the coverage area of the wide beam (for example, within the coverage area of the wide beam, an area whose service traffic exceeds a set threshold, or an area whose service traffic exceeds average service traffic within the coverage area of the wide beam by a difference greater than a set threshold) may be determined as a hotspot area within the coverage area of the wide beam. That is, the area predetermined within the coverage area of the wide beam may include a hotspot area. It can be understood that there may be more than one hotspot area, and the narrow beam antenna submodule 1022 transmits a narrow beam to the hotspot area, so that the narrow beam covers the hotspot area. Certainly, the area predetermined within the coverage area of the wide beam may also include non-hotspot areas. For example, an area with relatively poor wide beam coverage or another area with a special requirement. These non-hotspot areas are also covered by a narrow beam transmitted by the narrow beam antenna submodule 1022. It can be understood that the area predetermined within the coverage area of the wide beam herein may be determined in different manners according to different requirements or scenarios, which is not limited in this embodiment of the present invention.

Further, the sum of a quantity of antenna ports of the wide beam transmitted by the wide beam antenna submodule 1021 and a quantity of antenna ports of each narrow beam transmitted by the narrow beam antenna submodule 1022 is not greater than the sum of a quantity of radio frequency channels of the radio frequency module 101 in the wireless communications apparatus. The radio frequency module 101 in this embodiment of the present invention may include a radio frequency unit, and the radio frequency unit may be a radio remote unit (Radio Remote Unit, RRU), or may be a radio frequency (Radio Frequency, RF) unit integrated with a BBU.

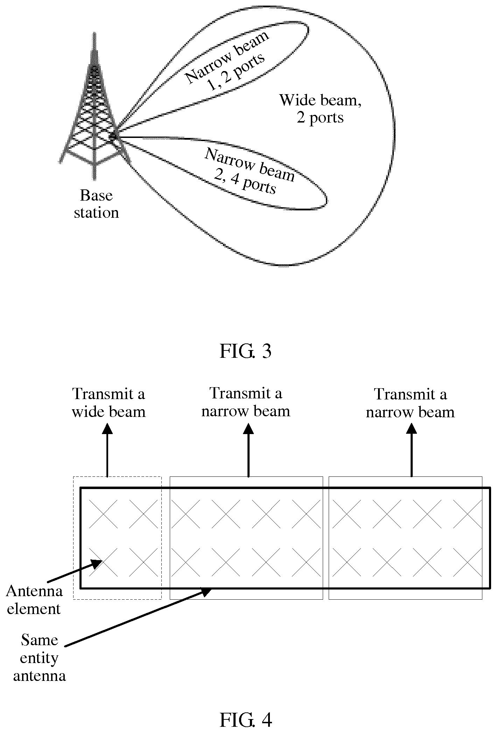

For a hotspot area with relatively large service traffic, to ensure a requirement for high service traffic in the hotspot area, more antenna ports can be configured for a narrow beam covering the hotspot area, compared with a narrow beam covering a non-hotspot area. That is, a quantity of antenna ports of a narrow beam transmitted by the narrow beam antenna submodule 1022 to a hotspot area may be greater than a quantity of antenna ports of a narrow beam transmitted by the narrow beam antenna submodule 1022 to a non-hotspot area, as shown in FIG. 3.

FIG. 3 is a schematic diagram of a quantity of antenna ports of a beam transmitted by a base station according to an embodiment of the present invention. In FIG. 3, it is assumed that the sum of a quantity of radio frequency channels of each radio frequency unit in the base station is 8, and if the base station transmits one wide beam and two narrow beams (a narrow beam 1 and a narrow beam 2) to a sector, the sum of quantities of antenna ports of these three beams is not greater than 8. In addition, because an area covered by the narrow beam 2 is a hotspot area, and an area covered by the narrow beam 1 is a non-hotspot area, a quantity of antenna ports of the narrow beam 2 is greater than a quantity of antenna ports of the narrow beam 1. In FIG. 3, a quantity of antenna ports of each of the wide beam and the narrow beam 1 is 2, and the quantity of antenna ports of the narrow beam 2 is 4. That is, the wide beam and the narrow beam 1 are 2-port beams, and the narrow beam 2 is a 4-port beam.

In FIG. 3, an example that the sum of a quantity of antenna ports of a wide beam and a quantity of antenna ports of narrow beams is equal to the sum of a quantity of radio frequency channels of each radio frequency unit in a wireless communications apparatus is used for description. The sum of the quantity of antenna ports of the wide beam and the quantity of antenna ports of the narrow beams may also be less than the sum of the quantity of radio frequency channels of each radio frequency unit in the wireless communications apparatus. For example, assuming that the sum of the quantity of radio frequency channels of each radio frequency unit in the wireless communications apparatus is 8, all the wide beam and the two narrow beams may be 2-port beams, that is, the sum of the quantity of antenna ports of the wide beam and the quantity of antenna ports of the narrow beams is 6.

Certainly, a quantity of antenna ports of each beam may also be configured according to service traffic of each area within a sector, where larger service traffic within an area indicates a larger quantity of antenna ports configured for a narrow beam that covers the area, and details are not described herein again.

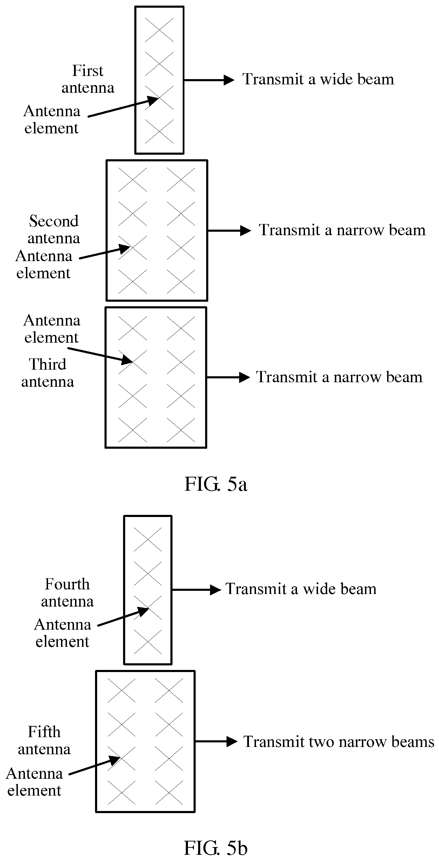

Further, the wide beam antenna submodule 1021 and the narrow beam antenna submodule 1022 shown in FIG. 1 may be a same entity antenna, as shown in FIG. 4. The wide beam antenna submodule 1021 and the narrow beam antenna submodule 1022 may also be different entity antennas, as shown in FIG. 5a and FIG. 5b. When the wide beam antenna submodule 1021 and the narrow beam antenna submodule 1022 are different entity antennas, the wide beam antenna submodule 1021 may be a conventional macro base station antenna, and the narrow beam antenna submodule 1022 may be a panel antenna.

FIG. 4 is a schematic diagram in which a wide beam antenna submodule and a narrow beam antenna submodule are a same entity antenna according to an embodiment of the present invention. In FIG. 4, assuming that beams to be transmitted by a base station are one wide beam and two narrow beams, during entity antenna deployment, the wide beam antenna submodule and the narrow beam antenna submodule may be deployed as a same entity antenna. A part of antenna elements in the entity antenna is used to transmit the wide beam, and the other part of the antenna elements is used to transmit the two narrow beams. For example, the wide beam may be transmitted by using antenna elements within a dashed area shown in FIG. 4, and the two narrow beams may be transmitted by using antenna elements within two solid-line areas shown in FIG. 4. It should be noted that physical positions of antenna element areas in which the wide beam and the narrow beams are transmitted in FIG. 4 are not limited to left-right distribution shown in the figure.

FIG. 5a is a schematic diagram in which a wide beam antenna submodule and a narrow beam antenna submodule are different entity antennas according to an embodiment of the present invention. In FIG. 5a, still assuming that beams to be transmitted by a base station to a sector are one wide beam and two narrow beams, during entity antenna deployment, the wide beam antenna submodule and the narrow beam antenna submodule may be deployed as different entity antennas, where one entity antenna is used to transmit the wide beam, and other entity antennas are used to transmit the two narrow beams. For example, as shown in FIG. 5a, three entity antennas may be deployed, which are a first antenna, a second antenna, and a third antenna respectively. The wide beam is transmitted by the first antenna, and the two narrow beams are transmitted by the second antenna and the third antenna respectively.

FIG. 5b is another schematic diagram in which a wide beam antenna submodule and a narrow beam antenna submodule are different entity antennas according to an embodiment of the present invention. In FIG. 5b, still assuming that beams to be transmitted by a base station to a sector are one wide beam and two narrow beams, during entity antenna deployment, two entity antennas shown in FIG. 5b may be deployed, which are a fourth antenna and a fifth antenna respectively. The wide beam is transmitted by the fourth antenna, and the two narrow beams are transmitted by the fifth antenna.

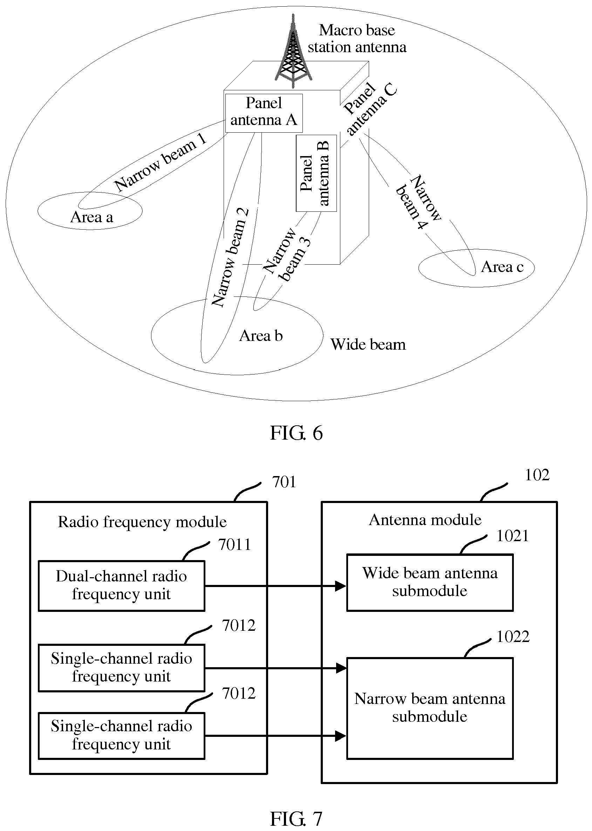

FIG. 6 is a schematic diagram of deployment of an entity antenna according to an embodiment of the present invention. In FIG. 6, a wide beam is transmitted by a macro base station antenna located at the top of a building; a narrow beam 1, a narrow beam 2, a narrow beam 3, and a narrow beam 4 are transmitted by panel antennas fastened on side walls of the building. Both the narrow beam 1 and the narrow beam 2 are transmitted by a panel antenna A, and the narrow beam 3 and the narrow beam 4 are transmitted by a panel antenna B and a panel antenna C respectively. The narrow beam 1 covers an area a, the narrow beam 2 and the narrow beam 3 cover an area b, and the narrow beam 4 covers an area c.

During entity antenna deployment, compared with deploying a wide beam antenna submodule and a narrow beam antenna submodule as a same entity antenna, deploying the wide beam antenna submodule and the narrow beam antenna submodule as different entity antennas features low costs, a small size (air resistance can be reduced), and flexible and easy deployment. However, when the wide beam antenna submodule and the narrow beam antenna submodule are deployed as different entity antennas, the narrow beam antenna submodule implemented by using a panel antenna may be fastened on a side wall of a building, which facilitates deployment.

Further, in this embodiment of the present invention, the radio frequency module 101 shown in FIG. 1 includes a radio frequency unit 1011 connected to the wide beam antenna submodule and a radio frequency unit 1012 connected to the narrow beam antenna submodule. The radio frequency unit 1011 connected to the wide beam antenna submodule is configured to process data to be sent by the wireless communications apparatus to UE, and send processed data to the wide beam antenna submodule 1021, or receive and process data that is sent by the wide beam antenna submodule 1021 to the radio frequency unit 1011 connected to the wide beam antenna submodule. The radio frequency unit 1012 connected to the narrow beam antenna submodule is configured to process data to be sent by the wireless communications apparatus to the UE, and send processed data to the narrow beam antenna submodule 1022, or receive and process data that is sent by the narrow beam antenna submodule 1022 to the radio frequency unit 1012 connected to the narrow beam antenna submodule. A quantity of antenna ports of a wide beam transmitted by the wide beam antenna submodule 1021 is the same as a quantity of radio frequency channels of the radio frequency unit 1011 connected to the wide beam antenna submodule. A quantity of antenna ports (one antenna port corresponds to one radio frequency channel) of each narrow beam transmitted by the narrow beam antenna submodule 1022 is the same as a quantity of radio frequency channels of a radio frequency unit that is configured to process a data flow to be transmitted by each narrow beam and that is in the radio frequency unit 1012 connected to the narrow beam antenna submodule. It can be understood that the quantity of antenna ports of each narrow beam transmitted by the narrow beam antenna submodule 1022 may be the same or may be different.

According to the wireless communications apparatus that is shown in FIG. 1 and provided in this embodiment of the present invention, because a radio frequency unit connected to a wide beam antenna submodule is different from a radio frequency unit connected to a narrow beam antenna submodule, and the radio frequency units may have different radio frequency channels, a wide beam and a narrow beam may be different in antenna port. Therefore, a quantity of antenna ports of each narrow beam can be configured more flexibly.

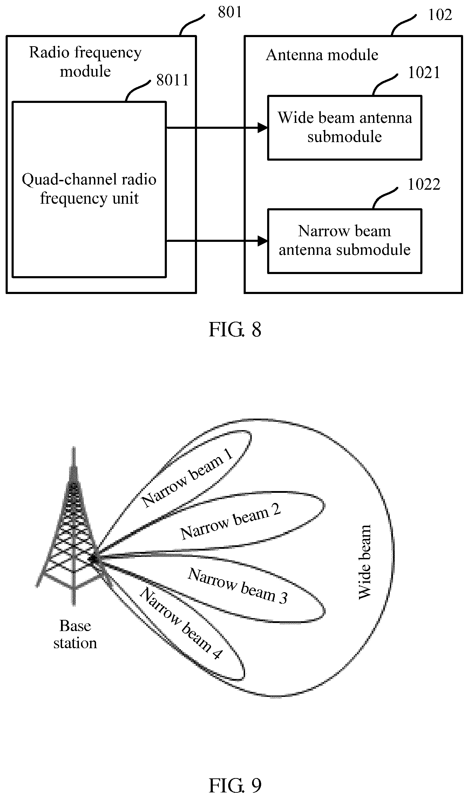

An example that the wide beam antenna submodule 1021 transmits one wide beam whose quantity of antenna ports is 2, and the narrow beam antenna submodule transmits two narrow beams whose quantity of antenna ports is 1 is used for description in the following, as shown in FIG. 7 and FIG. 8.

In this embodiment of the present invention, the radio frequency unit 1011 connected to the wide beam antenna submodule is a dual-channel radio frequency unit; the wide beam antenna submodule 1021 is specifically configured to transmit one wide beam whose quantity of antenna ports is 2. The radio frequency unit 1012 connected to the narrow beam antenna submodule is two single-channel radio frequency units; and the narrow beam antenna submodule 1022 is specifically configured to transmit two narrow beams whose quantity of antenna ports is 1, as shown in FIG. 7.

FIG. 7 is a schematic structural diagram of another wireless communications apparatus according to an embodiment of the present invention. The wireless communications apparatus shown in FIG. 7 includes a radio frequency module 701, and an antenna module 102 which forming a wide beam antenna submodule 1021 and a narrow beam antenna submodule 1022. The radio frequency module 701 includes one dual-channel radio frequency unit 7011 and two single-channel radio frequency units 7012. The dual-channel radio frequency unit 7011 is connected to the wide beam antenna submodule 1021, and the two single-channel radio frequency units 7012 are connected to the narrow beam antenna submodule 1022. The wide beam antenna submodule 1021 transmits one wide beam whose quantity of antenna ports is 2, and the narrow beam antenna submodule 1022 transmits two narrow beams whose quantity of antenna ports is 1.

Certainly, one quad-channel radio frequency unit may also be used to connect to the wide beam antenna submodule and the narrow beam antenna submodule, as shown in FIG. 8.

FIG. 8 is a schematic structural diagram of a wireless communications apparatus that connects to a wide beam antenna submodule and a narrow beam antenna submodule by using a quad-channel radio frequency unit. The wireless communications apparatus shown in FIG. 8 includes a radio frequency module 801, and an antenna system 102 which forming a wide beam antenna submodule 1021 and a narrow beam antenna submodule 1022. The radio frequency module 801 includes one quad-channel radio frequency unit 8011, two channels of the quad-channel radio frequency unit 8011 are connected to the wide beam antenna submodule 1021, and the other two channels are connected to the narrow beam antenna submodule 1022. That is, by using the two channels connected to the wide beam antenna submodule 1021, the quad-channel radio frequency unit 80121 sends data processed by itself to the wide beam antenna submodule 1021, or receives and processes data sent by the wide beam antenna submodule 1021. By using the two channels connected to the narrow beam antenna submodule 1022, the quad-channel radio frequency unit 8011 sends data processed by itself to the narrow beam antenna submodule 1022, or receives and processes data sent by the narrow beam antenna submodule 1022. Then, the wide beam antenna submodule 1021 transmits one wide beam whose quantity of antenna ports is 2, and the narrow beam antenna submodule 1022 transmits two narrow beams whose quantity of antenna ports is 1.

Further, when one wide beam whose quantity of antenna ports is 2 and two narrow beams whose quantity of antenna ports is 1 are transmitted, width of the two narrow beams may be 30 degrees, the two narrow beams respectively point to a positive 30-degree direction and a negative 30-degree direction of a main lobe of the wide beam, and polarization directions of the two narrow beams may be orthogonal or the same. For example, the polarization directions of the two narrow beams may be a positive 45-degree polarization and a negative 45-degree polarization, respectively, or both may be vertical polarizations.

Similarly, two dual-channel radio frequency units may also be used to connect to a wide beam antenna subsystem and a narrow beam antenna subsystem, respectively, where one dual-channel radio frequency unit is connected to the wide beam antenna subsystem, and the other dual-channel radio frequency unit is connected to the narrow beam antenna subsystem. That is, two dual-channel radio frequency units form a radio frequency module, where one dual-channel radio frequency unit is connected to the wide beam antenna submodule, and the other dual-channel radio frequency unit is connected to the narrow beam antenna submodule, where the wide beam antenna submodule transmits one wide beam whose quantity of antenna ports is 2, and the narrow beam antenna submodule transmits two narrow beams whose quantity of antenna ports is 1.

An example that the wide beam antenna submodule 1021 transmits one wide beam whose quantity of antenna ports is 2, and the narrow beam antenna submodule transmits two narrow beams whose quantity of antenna ports is 1 is used for description in FIG. 7 and FIG. 8. When a quantity of narrow beams transmitted by the narrow beam antenna submodule is another quantity, it is only necessary to connect, for each narrow beam, an antenna transmitting the narrow beam and a radio frequency channel that is used to process data to be transmitted by the narrow beam and that is in a radio frequency unit. For example, assuming that a base station has four radio frequency channels in total and needs to transmit one wide beam and three narrow beams, a quantity of antenna ports of each beam may be 1, and for each beam, a radio frequency channel that is used to process data to be transmitted by the beam and that is in a radio frequency unit (it is applicable to adopt four single-channel radio frequency units, two dual-channel radio frequency units, one quad-channel radio frequency unit, or two single-channel radio frequency units and one dual-channel radio frequency unit) is connected to an antenna transmitting the beam.

Further, in this embodiment of the present invention, it may be configured that transmit power used by the narrow beam antenna submodule 1022 to transmit a narrow beam is lower than transmit power used by the wide beam antenna submodule 1021 to transmit a wide beam, so as to avoid that a signal transmitted by the narrow beam within a sector exceeds a coverage area of the wide beam within the sector, and further to prevent the narrow beam within the sector from causing interference to a wide beam within a neighboring sector. In addition, for each narrow beam, a larger included angle between a direction in which the narrow beam antenna submodule transmits the narrow beam and a direction of the wide beam indicates lower transmit power used to transmit the narrow beam. In this embodiment of the present invention, the included angle between the direction of the narrow beam and that of the wide beam refers to an included angle between a direction to which a main lobe of the narrow beam points and a direction to which a main lobe of the wide beam points.

FIG. 9 is a schematic diagram of transmit power used by a base station to transmit each beam according to an embodiment of the present invention. In FIG. 9, assuming that transmit power used by the base station to transmit a wide beam is 40 W, transmit power used by the base station to transmit each narrow beam to a coverage area of the wide beam is less than 40 W. Because included angles between directions of a narrow beam 1 and a narrow beam 4 and a direction of the wide beam are relatively large, transmit power used by the base station to transmit both the narrow beam 1 and the narrow beam 4 is relatively low and is 5 W. Because included angles between directions of a narrow beam 2 and a narrow beam 3 and the direction of the wide beam is relatively small, transmit power used by the base station to transmit both the narrow beam 2 and the narrow beam 3 is relatively high and is 10 W. It can be seen from FIG. 9 that all coverage areas of the narrow beam 1, the narrow beam 2, the narrow beam 3, and the narrow beam 4 do not exceed the coverage area of the wide beam; therefore, no interference is caused to a wide beam of a neighboring sector. It should be noted that, specific values of the foregoing power are exemplary, and this embodiment of the present invention sets no limitation thereto.

In addition, an embodiment of the present invention further provides a base station, including at least one wireless communications apparatus described in any one of embodiments in FIG. 1, FIG. 7, and FIG. 8.

Based on the foregoing wireless communications apparatus provided in the embodiment of the present invention, an embodiment of the present invention further provides a wireless communication method. In this embodiment of the present invention, a base station transmits a wide beam and transmits at least two narrow beams to a coverage area of the wide beam. When sending data to UE within the coverage area of the wide beam, the base station sends the data to the UE by using at least one transmitted beam; when receiving data sent by UE within the coverage area of the wide beam, the base station receives, by using at least one transmitted beam, the data sent by the UE.

In this embodiment of the present invention, the base station may transmit a conventional wide beam by using a wide beam antenna submodule. The wide beam antenna submodule may be a conventional macro base station antenna. A coverage area of the wide beam transmitted by the base station is a coverage area of a sector. According to a preset sector coverage area, the base station may transmit a wide beam with a corresponding coverage area by using the wide beam antenna submodule.

When transmitting the conventional wide beam by using the conventional macro base station antenna, the base station may transmit at least two narrow beams to the coverage area of the wide beam by using a narrow beam antenna submodule at the same time. The narrow beam antenna submodule may be specifically a narrow beam antenna. Configuration (such as a horizontal direction, beam width, a downtilt, transmit power, and a quantity of antenna ports) of each narrow beam antenna may be the same or may be different, and the configuration of each narrow beam antenna may be static configuration or may be semi-static configuration. A same time-frequency resource may be adopted for each narrow beam, so as to implement multiplexing of spectrum resources, and increase a capacity within a unit area.

In this embodiment of the present invention, for a coverage area of a wide beam (that is, a coverage area of a sector) transmitted by the base station, an area to be covered by a narrow beam may be predetermined within the coverage area of the wide beam, where one predetermined area is under coverage of at least one narrow beam transmitted by the base station. Specifically, the base station may transmit a narrow beam to the predetermined area. When a quantity of areas predetermined within the coverage area of the wide beam is greater than one, the base station transmits at least one narrow beam in a direction corresponding to each predetermined area; and when the quantity of areas predetermined within the coverage area of the wide beam is one, the base station transmits at least two narrow beams in a direction corresponding to the area. In addition, in this embodiment of the present invention, coverage areas of at least two narrow beams may partly overlap with each other.

Further, a predetermined area to be covered by a narrow beam may include an area with relatively large service traffic (for example, an area whose service traffic exceeds a set threshold and within the sector, or an area whose service traffic exceeds average service traffic within the sector by a difference greater than a set threshold), that is, a hotspot area. Certainly, an area with a specific requirement may also be determined as an area to be covered by a narrow beam.

Further, the base station may select at least one beam from the transmitted wide beam and the transmitted at least two narrow beams, and perform data transmission with user equipment UE within the coverage area of the wide beam by using the selected at least one beam. Specifically, the base station may send data to the UE by using the selected beam, or receive, by using the selected beam, data sent by the UE.

Further, according to quality of a channel corresponding to each beam, the base station may determine at least one beam used to perform data transmission with UE. For example, the base station may instruct, by using the wide beam, the UE to send a channel status report by using a specified time-frequency resource, and the UE may measure the quality of the channel corresponding to each beam (including the wide beam and each narrow beam) to obtain the channel status report, and send the channel status report to the base station by using the time-frequency resource specified by the base station. The base station receives, by using the specified time-frequency resource, the channel status report sent by the UE, and selects, according to the quality that is of the channel corresponding to each beam and that is carried in the channel status report sent by the UE, at least one beam from the transmitted wide beam and the transmitted at least two narrow beams, so as to perform data transmission with the UE. The base station performs data transmission with the UE by using a time-frequency resource on the selected beam.

In this embodiment of the present invention, a method for performing, by the base station, data transmission with UE by using a selected beam may be specifically as follows: When the base station performs data transmission with different UE by using different narrow beams respectively, time-frequency resources used on the different narrow beams are the same, so as to implement multiplexing of spectrum resources; and when the base station performs data transmission with different UE by separately using a wide beam and a narrow beam, a time-frequency resource used on the wide beam is different from a time-frequency resource used on the narrow beam.

By means of the foregoing method, at least two narrow beams are superimposed on a basis of a conventional wide beam in a sector, so that under a condition that no new site is added, a quantity of transmit antennas within a unit area can be increased, and a capacity within the unit area can be increased, which is not limited in practical application and is easy to implement. In addition, a coverage relationship between a current sector and a neighboring sector is not changed.

Further, in this embodiment of the present invention, when the base station transmits each narrow beam to a coverage area (that is, a sector) of a wide beam, transmit power used to transmit each narrow beam is lower than transmit power used to transmit the wide beam, so as to avoid that a coverage area of a narrow beam within a sector exceeds the coverage area of the wide beam within the sector, and further to prevent the narrow beam within the sector from causing interference to a wide beam within a neighboring sector. In addition, for each narrow beam, a larger included angle between a direction in which the narrow beam is transmitted and a direction of the wide beam indicates lower transmit power used to transmit the narrow beam.

Further, a quantity of antenna ports of each transmitted narrow beam may further be configured in the base station according to a hotspot area and a non-hotspot area within the coverage area of the wide beam. Specifically, because a quantity of radio frequency channels (one antenna port of the base station corresponds to one radio frequency channel) of a radio frequency module (the radio frequency module consists of a radio frequency unit, where the radio frequency unit may include an RRU and may also include an RF unit integrated with a BBU) is limited, the sum of a quantity of antenna ports of the wide beam transmitted by the base station and a quantity of antenna ports of each narrow beam transmitted by the base station is not greater than the sum of a quantity of radio frequency channels of the radio frequency module in the base station. In addition, a narrow beam that covers the hotspot area generally needs more antenna ports (that is, more radio frequency channels are needed to process a data flow); therefore, a quantity of antenna ports of a narrow beam transmitted to the hotspot area is greater than a quantity of antenna ports of a narrow beam transmitted to the non-hotspot area.

Certainly, a quantity of antenna ports of each beam may also be configured according to service traffic of each area within a sector, where larger service traffic within an area indicates a larger quantity of antenna ports configured for a narrow beam that covers the area, and details are not described herein again.

In this embodiment of the present invention, when transmitting a wide beam, according to a preset quantity of antenna ports of a wide beam, the base station may determine a quantity of radio frequency channels of a radio frequency unit connected to a wide beam antenna submodule that is configured to transmit the wide beam; connect a radio frequency channel whose quantity is corresponding to the quantity of radio frequency channels and in the radio frequency unit to the wide beam antenna submodule; and transmit a wide beam of the corresponding quantity of antenna ports by using the wide beam antenna submodule. In addition, to reduce as much costs as possible of a device used for transmitting a narrow beam, when transmitting a narrow beam, according to a quantity of radio frequency channels of a radio frequency unit connected to a narrow beam antenna submodule that is configured to transmit a narrow beam, the base station may determine a quantity of antenna ports of a to-be-transmitted narrow beam, and transmit the narrow beam of the corresponding quantity of antenna ports by using the narrow beam antenna submodule.

Further, in this embodiment of the present invention, the base station may transmit one wide beam whose quantity of antenna ports is 2 and two narrow beams whose quantity of antenna ports is 1, width of the two narrow beams may be 30 degrees, two narrow beams respectively points to a positive 30-degree direction and a negative 30-degree direction of a main lobe of the wide beam, and polarization directions of the two narrow beams may be orthogonal or the same.

In addition, during practical deployment, antennas adopted by the base station when transmitting a wide beam and at least two narrow beams may be deployed as a same entity antenna, or may be deployed as different entity antennas, and details are not described herein again.

According to the wireless communications apparatus and method provided in the embodiments of the present invention, an antenna module transmits a wide beam, transmits at least two narrow beams to a coverage area of the wide beam, and performs data transmission with UE within the coverage area of the wide beam by using at least one transmitted beam. By means of the foregoing method, under a condition that no new site is added, a quantity of transmit antennas within a unit area can be increased, and a capacity within the unit area can be increased, which is not limited in practical application and is easy to implement.

A person skilled in the art should understand that the embodiments of the present application may be provided as a method, a system, or a computer program product. Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, a CD-ROM, an optical memory, and the like) that include computer usable program code.

The present application is described with reference to the flowcharts and/or block diagrams of the method, the device (system), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present application have been described, persons skilled in the art can make changes and modifications to these embodiments once they learn the basic inventive concept. Therefore, the following claims are intended to be construed as to cover the preferred embodiments and all changes and modifications falling within the scope of the present application.

## Claims

1. A wireless communications apparatus, comprising an antenna module (102), wherein the antenna module is connected to a radio frequency module (101):
the antenna module (102) is configured to transmit a wide beam and transmit at least two narrow beams to a coverage area of the wide beam; and
wherein the antenna module (102) is further configured to send, through at least one of the beams transmitted by the antenna module (102), data processed by the radio frequency module (101) to a user equipment, UE, when there is first data sent to the UE within the coverage area of the wide beam, or, wherein the antenna module (102) is further configured to receive, through at least one of the beams transmitted by the antenna module (102) when second data is received by the apparatus within the coverage area of the wide beam, **characterized in that** the narrow beam and the wide beam have different radio frequency channels .

2. The apparatus according to claim 1, wherein the antenna module comprises:
a wide beam antenna submodule (1021), configured to transmit a wide beam whose coverage area is a preset sector coverage area; and
a narrow beam antenna submodule(1022), configured to transmit the at least two narrow beams to the coverage area of the wide beam according to an area predetermined within the coverage area of the wide beam, wherein one predetermined area is under coverage of at least one narrow beam.

3. The apparatus according to claim 2, wherein the wide beam antenna submodule (1021) and the narrow beam antenna submodule (1022) are a same entity antenna; or
the wide beam antenna submodule (1021) and the narrow beam antenna submodule (1022) are different entity antennas.

4. The apparatus according to claim 3, wherein when the wide beam antenna submodule (1021) and the narrow beam antenna submodule (1022) are different entity antennas, the narrow beam antenna submodule (1022) is a panel antenna.

5. The apparatus according to any one of claims 2 to 4,
a quantity of antenna ports of the wide beam transmitted by the wide beam antenna submodule(1022) is the same as a quantity of radio frequency channels of radio frequency units connected to the wide beam antenna submodule(1021); and
a quantity of antenna ports of each narrow beam transmitted by the narrow beam antenna submodule (1022) is the same as a quantity of radio frequency channels of a radio frequency unit that is configured to process data to be transmitted by each narrow beam and that is in the radio frequency unit connected to the narrow beam antenna submodule (1022).

6. The apparatus according to claim 5, wherein the radio frequency unit connected to the wide beam antenna submodule is a dual-channel radio frequency unit, wherein
the wide beam antenna submodule (1021) is configured to transmit one wide beam whose quantity of antenna ports is 2; and
the radio frequency unit connected to the narrow beam antenna submodule (1022) comprises two single-channel radio frequency units or a dual-channel radio frequency unit, wherein
the narrow beam antenna submodule (1022) is configured to transmit two narrow beams whose quantity of antenna ports is 1.

7. The apparatus according to claim 5, wherein the radio frequency module (101) is a quad-channel radio frequency unit (8011), wherein
two channels of the quad-channel radio frequency unit are connected to the wide beam antenna submodule, and the other two channels are connected to the narrow beam antenna submodule;
the wide beam antenna submodule (1021) is configured to transmit one wide beam whose quantity of antenna ports is 2; and
the narrow beam antenna submodule (1022) is configured to transmit two narrow beams whose quantity of antenna ports is 1.

8. The apparatus according to any one of claims 2 to 7, wherein the sum of the quantity of antenna ports of the wide beam transmitted by the wide beam antenna submodule (1021) and a quantity of antenna ports of each narrow beam transmitted by the narrow beam antenna submodule (1022) is not greater than the sum of a quantity of radio frequency channels of the radio frequency module.

9. The apparatus according to any one of claims 2 to 8, wherein a quantity of antenna ports of a narrow beam that is transmitted by the narrow beam antenna submodule (1022) to a hotspot area in the predetermined area is greater than a quantity of antenna ports of a narrow beam that is transmitted by the narrow beam antenna submodule(1022) to a non-hotspot area in the predetermined area.

10. The apparatus according to any one of claims 1 to 9, wherein the antenna module (102) is specifically configured to perform data transmission with different UE by respectively using different narrow beams, wherein time-frequency resources used on the different narrow beams are the same; or
perform data transmission with different UE through a wide beam and a narrow beam respectively, wherein a time-frequency resource used on the wide beam is different from a time-frequency resource used on the narrow beam.

11. A base station, comprising at least one wireless communications apparatus according to any one of claims 1 to 10.

12. A wireless communication method applied in system that a wide beam and at least two narrow beams being transmitted to a coverage area of the wide beam, wherein the method comprises:
sending data to a user equipment, UE, within the coverage area of the wide beam through at least one of the wide beam and the at least two narrow beams ; or
receiving, within the coverage area of the wide beam through at least one of the wide beam and the at least two beams, data from the UE; **characterized in that** the narrow beam and the wide beam have different radio frequency channels.

13. The method according to claim 12, wherein the at least two narrow beams are:
at least two narrow beams that are transmitted to the coverage area of the wide beam according to an area predetermined within the coverage area of the wide beam, wherein one predetermined area is under coverage of at least one narrow beam.

14. The method according to claim 12 or 13, wherein the quantity of antenna ports of the wide beam is 2 and the quantity of antenna ports of each of two narrow beams is 1.

15. The method according to any one of claims 12 to 14, wherein when data transmission is performed with different UE through different narrow beams respectively, time-frequency resources used on the different narrow beams are the same; or
when data transmission is performed with different UE by separately using a wide beam and a narrow beam, a time-frequency resource used on the wide beam is different from a time-frequency resource used on the narrow beam.

## Patentansprüche

1. Drahtloskommunikationsvorrichtung, die ein Antennenmodul (102) umfasst, wobei das Antennenmodul mit einem Hochfrequenzmodul (101) verbunden ist:
das Antennenmodul (102) dafür ausgelegt ist, einen breiten Strahl zu senden und wenigstens zwei schmale Strahlen in einen Abdeckungsbereich des breiten Strahls zu senden; und
das Antennenmodul (102) ferner dafür ausgelegt ist, durch wenigstens einen der vom Antennenmodul (102) gesendeten Strahlen, vom Hochfrequenzmodul (101) verarbeitete Daten an ein Benutzergerät, UE, zu senden, wenn es erste an das UE gesendete Daten in dem Abdeckungsbereich des breiten Strahls gibt, oder wobei das Antennenmodul (102) ferner dafür ausgelegt ist, durch wenigstens einen der vom Antennenmodul (102) gesendeten Strahlen zu empfangen, wenn zweite Daten durch die Einrichtung innerhalb des Abdeckungsbereichs des breiten Strahls empfangen werden, **dadurch gekennzeichnet, dass** der schmale Strahl und der breite Strahl verschiedene Hochfrequenzkanäle aufweisen.

2. Vorrichtung gemäß Anspruch 1, wobei das Antennenmodul umfasst:
ein breit strahlendes Antennenuntermodul (1021), das dafür ausgelegt ist, einen breiten Strahl zu senden, dessen Abdeckungsbereich ein Abdeckungsbereich mit voreingestelltem Sektor ist; und
ein eng strahlendes Antennenuntermodul (1022), das dafür ausgelegt ist, die wenigstens zwei schmalen Strahlen in den Abdeckungsbereich des breiten Strahls zu senden, gemäß einem vorbestimmten Bereich innerhalb des Abdeckungsbereichs des breiten Strahls, wobei ein vorbestimmter Bereich durch wenigstens einen schmalen Strahl abgedeckt wird.

3. Vorrichtung gemäß Anspruch 2, wobei das breit strahlende Antennenuntermodul (1021) und das eng strahlende Antennenuntermodul (1022) ein und dieselbe Antenneneinheit sind; oder
wobei das breit strahlende Antennenuntermodul (1021) und das eng strahlende Antennenuntermodul (1022) verschiedene Antenneneinheiten sind.

4. Vorrichtung gemäß Anspruch 3, wobei, wenn das breit strahlende Antennenuntermodul (1021) und das eng strahlende Antennenuntermodul (1022) verschiedene Antenneneinheiten sind, das eng strahlende Antennenuntermodul (1022) eine Panelantenne ist.

5. Vorrichtung gemäß einem der Ansprüche 2 bis 4,
eine Anzahl von Antennenports des breiten Strahls, der von dem breit strahlenden Antennenuntermodul (1022) gesendet wird, gleich der Anzahl von Hochfrequenzkanälen von Hochfrequenzeinheiten ist, die mit dem breit strahlenden Antennenuntermodul (1021) verbunden sind; und
eine Anzahl von Antennenports jedes schmalen Strahls, der von dem eng strahlenden Antennenuntermodul (1022) gesendet wird, gleich der Anzahl von Hochfrequenzkanälen einer Hochfrequenzeinheit ist, die dafür ausgelegt ist, Daten zu verarbeiten, die mit jedem schmalen Strahl zu senden sind, und in der die mit dem eng strahlenden Antennenuntermodul (1022) verbundene Hochfrequenzeinheit enthalten ist.

6. Vorrichtung gemäß Anspruch 5, wobei die mit dem breit strahlenden Antennenuntermodul verbundene Hochfrequenzeinheit eine Zweikanal-Hochfrequenzeinheit ist, wobei
das breit strahlende Antennenuntermodul (1021) dafür ausgelegt ist, einen einzelnen breiten Strahl zu senden, bei dem die Anzahl der Antennenports 2 beträgt; und wobei die mit dem eng strahlenden Antennenuntermodul (1022) verbundene Hochfrequenzeinheit zwei Einkanal-Hochfrequenzeinheiten oder eine Zweikanal-Hochfrequenzeinheit umfasst, wobei
das eng strahlende Antennenuntermodul (1022) dafür ausgelegt ist, zwei schmale Strahlen zu senden, bei denen die Anzahl der Antennenports 1 beträgt.

7. Vorrichtung gemäß Anspruch 5, wobei das Hochfrequenzmodul (101) eine Vierkanal-Hochfrequenzeinheit (8011) ist, wobei
zwei Kanäle der Vierkanal-Hochfrequenzeinheit mit dem breit strahlenden Antennenuntermodul verbunden sind und die anderen zwei Kanäle mit dem eng strahlenden Antennenuntermodul verbunden sind;
das breit strahlende Antennenuntermodul (1021) dafür ausgelegt ist, einen einzelnen breiten Strahl zu senden, bei dem die Anzahl der Antennenports 2 beträgt; und
das eng strahlende Antennenuntermodul (1022) dafür ausgelegt ist, zwei schmale Strahlen zu senden, bei denen die Anzahl der Antennenports 1 beträgt.

8. Vorrichtung gemäß einem der Ansprüche 2 bis 7, wobei die Summe aus der Anzahl von Antennenports des von dem breit strahlenden Antennenuntermodul (1021) gesendeten breiten Strahls und einer Anzahl von Antennenports jedes von dem eng strahlenden Antennenuntermodul (1022) gesendeten schmalen Strahls nicht größer ist als die Summe einer Anzahl von Hochfrequenzkanälen des Hochfrequenzmoduls.

9. Vorrichtung gemäß einem der Ansprüche 2 bis 8, wobei eine Anzahl von Antennenports eines von dem eng strahlenden Antennenuntermodul (1022) in einen Hotspotbereich im vorbestimmten Bereich gesendeten schmalen Strahls größer ist als eine Anzahl von Antennenports eines schmalen Strahls, der vom eng strahlenden Antennenuntermodul (1022) in einen Nicht-Hotspotbereich im vorbestimmten Bereich gesendet wird.

10. Vorrichtung gemäß einem der Ansprüche 1 bis 9, wobei das Antennenmodul (102) speziell dafür ausgelegt ist, eine Datenübertragung mit verschiedenen UE durchzuführen, unter Verwendung jeweils verschiedener schmaler Strahlen, wobei die auf den verschiedenen schmalen Strahlen belegten Zeit-Frequenz-Ressourcen gleich sind; oder
eine Datenübertragung mit verschiedenen UE durch jeweils einen breiten Strahl und einen schmalen Strahl durchzuführen, wobei eine auf dem breiten Strahl belegte Zeit-Frequenz-Ressource von einer auf dem schmalen Strahl belegten Zeit-Frequenz-Ressource verschieden ist.

11. Basisstation, umfassend wenigstens eine Drahtloskommunikationsvorrichtung gemäß einem der Ansprüche 1 bis 10.

12. Drahtloskommunikationsverfahren, das in System verwendet wird, das ein breiter Strahl und wenigstens zwei schmale Strahlen in einen Abdeckungsbereich des breiten Strahls gesendet werden, wobei das Verfahren umfasst:
Senden von Daten an ein Benutzergerät, UE, innerhalb des Abdeckungsbereichs des breiten Strahls durch wenigstens einen des breiten Strahls und der wenigstens zwei schmalen Strahlen; oder
Empfangen, innerhalb des Abdeckungsbereichs des breiten Strahls, von Daten von dem UE durch wenigstens eines des breiten Strahls und der wenigstens zwei Strahlen; **dadurch gekennzeichnet, dass** der schmale Strahl und der breite Strahl verschiedene Hochfrequenzkanäle aufweisen.

13. Verfahren gemäß Anspruch 12, wobei die wenigstens zwei schmalen Strahlen Folgendes sind:
wenigstens zwei schmale Strahlen, die in den Abdeckungsbereich des breiten Strahls gesendet werden, gemäß einem vorbestimmten Bereich innerhalb des Abdeckungsbereichs des breiten Strahls, wobei ein vorbestimmter Bereich durch wenigstens einen schmalen Strahl abgedeckt wird.

14. Verfahren gemäß Anspruch 12 oder 13, wobei die Anzahl von Antennenports des breiten Strahls 2 beträgt, und die Anzahl von Antennenports von jedem von zwei schmalen Strahlen 1 beträgt.

15. Verfahren gemäß einem der Ansprüche 12 bis 14, wobei, wenn eine Datenübertragung mit verschiedenen UE durch jeweils verschiedene schmale Strahlen durchführt wird, die auf den verschiedenen schmalen Strahlen belegten Zeit-Frequenz-Ressourcen gleich sind; oder
wenn eine Datenübertragung mit verschiedenen UE unter separater Verwendung eines breiten Strahls und eines schmalen Strahls durchführt wird, eine auf dem breiten Strahl belegte Zeit-Frequenz-Ressource von einer auf dem schmalen Strahl belegten Zeit-Frequenz-Ressource verschieden ist.

## Revendications

1. Appareil de communication sans fil, comprenant un module d'antenne (102), le module d'antenne étant connecté à un module de radiofréquence (101) ;
le module d'antenne (102) étant configuré pour émettre un large faisceau et émettre au moins deux faisceaux étroits vers une zone de couverture du large faisceau ; et
le module d'antenne (102) étant en outre configuré pour envoyer, par le biais d'au moins un des faisceaux émis par le module d'antenne (102), des données traitées par le module de radiofréquence (100) à un équipement utilisateur, UE, lorsque des premières données sont envoyées à l'UE dans la zone de couverture du large faisceau, ou le module d'antenne (102) étant en outre configuré pour recevoir, par le biais d'au moins un des faisceaux émis par le module d'antenne (102) lorsque des deuxièmes données sont reçues par l'appareil dans la zone de couverture du large faisceau, **caractérisé en ce que** le faisceau étroit et le large faisceau ont des canaux de radiofréquence différents.

2. Appareil selon la revendication 1, dans lequel le module d'antenne comprend :
un sous-module d'antenne de large faisceau (1021), configuré pour émettre un large faisceau dont la zone de couverture est une zone de couverture de secteur prédéfinie ; et
un sous-module d'antenne de faisceaux étroits (1022), configuré pour émettre les au moins deux faisceaux étroits à la zone de couverture du large faisceau conformément à une zone prédéterminée dans la zone de couverture du large faisceau, dans lequel une zone prédéterminée est couverte par au moins un faisceau étroit.

3. Appareil selon la revendication 2, dans lequel le sous-module d'antenne de large faisceau (1021) et le sous-module d'antenne de faisceaux étroits (1022) sont une même entité d'antenne, ou
le sous-module d'antenne de large faisceau (1021) et le sous-module d'antenne de faisceaux étroits (1022) sont des entités d'antenne différentes.

4. Appareil selon la revendication 3, dans lequel, quand le sous-module d'antenne de large faisceau (1021) et le sous-module d'antenne de faisceaux étroits (1022) sont des entités d'antenne différentes, le sous-module d'antenne de faisceaux étroits (1022) est une antenne panneau.

5. Appareil selon l'une quelconque des revendications 2 à 4,
une quantité de ports d'antenne du large faisceau émis par le sous-module d'antenne de large faisceau (1022) est identique à une quantité de canaux de radiofréquence d'unités de radiofréquence connectées au sous-module d'antenne de large faisceau (1021) ; et
une quantité de ports d'antenne de chaque faisceau étroit émis par le sous-module d'antenne de faisceaux étroits (1022) est identique à une quantité de canaux de radiofréquence d'une unité de radiofréquence qui est configurée pour traiter des données à transmettre par chaque faisceau étroit et qui se trouvent dans l'unité de radiofréquence connectée au sous-module d'antenne de faisceaux étroits (1022).

6. Appareil selon la revendication 5, dans lequel l'unité de radiofréquence connectée au sous-module d'antenne de large faisceau est une unité de radiofréquence à deux canaux, dans lequel
le sous-module d'antenne de large faisceau (1021) est configuré pour émettre un large faisceau dont la quantité de ports d'antenne est 2 ; et
l'unité de radiofréquence connectée au sous-module d'antenne de faisceaux étroits (1022) comprend deux unités de radiofréquence à canal unique ou une unité de radiofréquence à deux canaux, dans lequel le sous-module d'antenne de faisceaux étroits (1022) est configuré pour émettre deux faisceaux étroits dont la quantité de ports d'antenne est 1.

7. Appareil selon la revendication 5, dans lequel le module de radiofréquence (101) est une unité de radiofréquence à quatre canaux (8011), dans lequel
deux canaux de l'unité de radiofréquence à quatre canaux sont connectés au sous-module d'antenne de large faisceau, et les deux autres canaux sont connectés au sous-module d'antenne de faisceaux étroits ;
le sous-module d'antenne de large faisceau (1021) est configuré pour émettre un seul large faisceau dont la quantité de ports d'antenne est 2 ; et
le sous-module d'antenne de faisceaux étroits (1022) est configuré pour émettre deux faisceaux étroits dont la quantité de ports d'antenne est 1.

8. Appareil selon l'une quelconque des revendications 2 à 7, dans lequel la somme de la quantité de ports d'antenne du large faisceau émis par le sous-module d'antenne de large faisceau (1021) et d'une quantité de ports d'antenne de chaque faisceau étroit émis par le sous-module d'antenne de faisceaux étroits (1022) n'est pas supérieure à la somme d'une quantité de canaux de radiofréquence du module de radiofréquence.

9. Appareil selon l'une quelconque des revendications 2 à 8, dans lequel une quantité de ports d'antenne d'un faisceau étroit qui est émis par le sous-module d'antenne de faisceaux étroits (1022) vers une zone d'accès sans fil dans la zone prédéterminée est supérieure à une quantité de ports d'antenne d'un faisceau étroit qui est émis par le sous-module d'antenne de faisceaux étroits (1022) vers une zone non d'accès sans fil dans la zone prédéterminée.

10. Appareil selon l'une quelconque des revendications 1 à 9, dans lequel le module d'antenne (102) est configuré spécifiquement pour effectuer une transmission de données avec différents UE en utilisant respectivement différents faisceaux étroits, dans lequel les ressources temps-fréquence utilisées sur les différents faisceaux étroits sont les mêmes ; ou
effectuer une transmission de données avec différents UE par le biais d'un large faisceau et d'un faisceau étroit respectivement, dans lequel une ressource temps-fréquence utilisée sur le large faisceau est différente d'une ressource temps-fréquence utilisée sur le faisceau étroit.

11. Station de base, comprenant au moins un appareil de communication sans fil selon l'une quelconque des revendications 1 à 10.

12. Procédé de communication sans fil mis en oeuvre dans système qu'un large faisceau et au moins deux faisceaux étroits sont émis vers une zone de couverture du large faisceau, le procédé comprenant :
l'envoi de données à un équipement utilisateur, UE, dans la zone de couverture du large faisceau par le biais du large faisceau et/ou des au moins deux faisceaux étroits ; ou
la réception, à l'intérieur de la zone de couverture du large faisceau, par le biais du large faisceau et/ou des au moins deux faisceaux, de données provenant de l'UE ; **caractérisé en ce que** le faisceau étroit et le large faisceau ont des canaux de radiofréquence différents.

13. Procédé selon la revendication 12, dans lequel les au moins deux faisceaux étroits sont :
au moins deux faisceaux étroits qui sont émis vers la zone de couverture du large faisceau conformément à une zone prédéterminée dans la zone de couverture du large faisceau, dans lequel une zone prédéterminée est couverte par au moins un faisceau étroit.

14. Procédé selon la revendication 12 ou 13, dans lequel la quantité de ports d'antenne du large faisceau est 2 et la quantité de ports d'antenne de chacun des deux faisceaux étroits est 1.

15. Procédé selon l'une quelconque des revendications 12 à 14, dans lequel, quand une transmission de données est effectuée avec un différent UE par le biais de différents faisceaux étroits respectivement, les ressources temps-fréquence utilisées sur les différents faisceaux étroits sont les mêmes ; ou
quand une transmission de données est effectuée avec un différent UE en utilisant séparément un large faisceau et un faisceau étroit, une ressource temps-fréquence utilisée sur le large faisceau est différente d'une ressource temps-fréquence utilisée sur le faisceau étroit.
